# EUROPÄISCHE PATENTSCHRIFT

(11) **EP 2 127 234 B1**
(45) Veröffentlichungstag und Bekanntmachung des Hinweises auf die Patenterteilung: **23.08.2017**
(21) Anmeldenummer: 07857327.6
(22) Anmeldetag: 10.12.2007
(51) Int. Cl.: H04L 12/28

(54) **VERFAHREN UND VORRICHTUNG ZUR ERKENNUNG EINES NICHT BELEGTEN ÜBERTRAGUNGSKANALS IN EINEM MULTIMEDIA-ÜBERTRAGUNGSSYSTEM**
METHOD AND DEVICE FOR RECOGNIZING AN UNOCCUPIED TRANSMISSION CHANNEL IN A MULTIMEDIA TRANSMISSION SYSTEM
PROCÉDÉ ET DISPOSITIF POUR LA RECONNAISSANCE D'UN CANAL DE TRANSMISSION NON OCCUPÉ DANS UN SYSTÈME DE TRANSMISSION MULTIMÉDIA

(30) Priorität: 15.12.2006 DE 102006059354
(43) Veröffentlichungstag der Anmeldung: 02.12.2009
(73) Patentinhaber: Robert Bosch GmbH, 70469 Stuttgart (DE)
(72) Erfinder: BOENKE, Bjoern, 31139 Hildesheim (DE)
(86) Internationale Anmeldenummer: PCT/EP2007/063606
(87) Internationale Veröffentlichungsnummer: WO 2008/071655

(56) Entgegenhaltungen:
- WO-A-2005/100919
- US-A- 3 968 327
- US-A- 5 751 335
- US-A1- 2004 165 589

## Beschreibung

Die Erfindung betrifft ein Verfahren sowie eine Vorrichtung zur Erkennung eines nicht mit einem Nutzsignal belegten Übertragungskanals in einem Multikanal-Übertragungssystem nach der Gattung der nebengeordneten Ansprüche 1 und 7. Es ist bereits bekannt, dass Multikanal-Übertragungssysteme, beispielsweise in Bussen, Zügen oder Flugzeugen, eingesetzt werden, um insbesondere Audi-Programme an die einzelnen Sitzplätze der Fahrgäste zu verteilen. An jedem Sitzplatz ist ein Empfangsmodul angeordnet, mit dem die einzelnen Übertragungskanäle aufgerufen werden können. Häufig besitzt so ein Empfangsmodul einen Drehschalter oder Tipptasten, mit denen die vorhandenen Übertragungskanäle sequentiell aufgerufen werden können, um ein gewünschtes Programm zu hören oder zu sehen. Die Anzahl der Übertragungskanäle ist beliebig groß und hängt im Wesentlichen von der Konzeption des verwendeten Multikanal-Übertragungssystems und den zu versorgenden Sitzplätzen ab. Die Übertragungskanäle werden von einer Zentraleinheit gesteuert, an die unterschiedliche Signalquellen angeschlossen sind. Je nach der Anzahl der verwendeten Signalquellen, beispielsweise Rundfunkempfänger, CD-Spieler, Bandgeräte, Mikrofone für Durchsagen usw. sind in der Regel nicht alle vorhandenen Übertragungskanäle mit jeweils einer Signalquelle belegt. Werden am Empfangsmodul (Sitzplatzmodul) die einzelnen Übertragungskanäle durchgetastet, dann erscheinen in der Regel einige Übertragungskanäle, auf denen kein Nutzsignal empfangen werden kann. Um diesen Nachteil zu beseitigen, ist bereits bekannt geworden, dass die Sitzplatzmodule in einem verdeckt angeordneten Schalter ausgerüstet sind, der von einem Fahrgast nicht bedient werden kann. Mit dem Schalter wird die Anzahl der mit einem Nutzsignal belegten Übertragungskanäle auf einen vorgegebenen Maximalwert begrenzt.

Problematisch ist es allerdings, wenn später das Multikanal-Übertragungssystem geändert werden muss, weil beispielsweise eine oder mehrere weitere Signalquellen hinzugeschaltet werden sollen oder wenn eine der vorhandenen Signalquellen ausfällt und daher ein vorhandener Übertragungskanal nicht genutzt werden kann. Um dieses Problem zu lösen, müssen alle Sitzplatzmodule ausgebaut und von einem Techniker auf den aktuellen Status der verfügbaren Übertragungskanäle mit Hilfe des verdeckt angeordneten Schalters geändert werden. Diese Prozedur ist sehr aufwändig und daher kostenintensiv.

Aus der DE 101 23 842A1 ist ein System zur Steuerung von elektrisch ansteuerbaren Komponenten in einem Kraftfahrzeug bekannt. Bei diesem System steuert eine Zentralsteuereinheit mit einem entsprechenden Modul die verschiedenen elektrisch ansteuerbaren Komponenten, die in einem Kraftfahrzeug eingebaut sind. Die ansteuerbaren Fahrzeugkomponenten sind über verschiedene Bus-Systeme mit der Zentralsteuereinheit verbunden und können mit dieser kommunizieren. Die Zentralsteuereinheit weist des weiteren ein zweites Modul auf, mit dem Infotainement-Komponenten oder Multimedia-Komponenten gesteuert werden können. Mit dieser Anordnung soll eine Variantenvielfalt angeboten werden, die von einer einfachen Grundausstattung bis hin zu einem High-End-Multimediasystem reicht.

Die Patentschrift US 3,968,327 zeigt ein Fernsehsignalverteilsystem, in welches Programmsignale eines Films in nicht belegte Kanäle eingespeist werden. Ein Filter in einem Empfänger blockiert diese Signale, wobei der Filter mit einem Telefonsystem gekoppelt ist. Erst ein über das Telefonsystem übermitteltes Freigabesignal deaktiviert den Filter, so dass ein Nutzer sich den Film angucken kann.

Die Offenlegungsschrift WO 2005/100919 A1 zeigt ein Multimediagerät für Fahrzeuge, bei dem mehrere Geräte zeitgleich angeschlossen werden können.

Der Erfindung liegt die Aufgabe zugrunde, die Ausgestaltung eines Multikanal-Übertragungssystems so zu vereinfachen, dass am Empfangsmodul (Sitzplatzmodul) nur Übertragungskanäle ausgewählt werden können, die mit einem Nutzsignal belegt sind. Diese Aufgabe wird mit den Merkmalen der nebengeordneten Ansprüche 1, 7, 9 und 10 gelöst.

Bei dem erfindungsgemäßen Verfahren bzw. der Vorrichtung mit den kennzeichnenden Merkmalen der nebengeordneten Ansprüche 1 und 7 ergibt sich der Vorteil, dass bei einem Multikanal-Übertragungssystem insbesondere für die Übertragung von Ton- und/oder Bildsignalen am Empfangsmodul (Sitzplatzmodul) nur die Übertragungskanäle ausgewählt werden können, die auch tatsächlich mit einem Nutzsignal belegt sind. Alle nicht mit einem Nutzsignal belegten Übertragungskanäle werden automatisch gesperrt. Als besonders vorteilhaft wird dabei angesehen, dass bei einer Änderung des Multikanal-Übertragungssystems, bei dem neue Übertragungskanäle hinzukommen oder bestehende Übertragungskanäle nicht mehr benutzt werden sollen, die Freigabe der nutzbaren Übertragungskanäle automatisch angepasst wird. Ein umständlicher Ausbau der einzelnen Empfangsmodule und Einstellung auf die neuen nutzbaren Übertragungskanäle ist nicht mehr erforderlich. Dadurch reduziert sich der Aufwand für die Aktualisierung des Multikanal-Übertragungssystems in einem erheblichen Maße. Insbesondere ist es nicht mehr erforderlich, dass ein hochqualifizierter Fachmann die Anpassung der Übertragungskanäle an jedem Sitzplatz durchführen muss.

Durch die in den abhängigen Ansprüchen aufgeführten Maßnahmen sind vorteilhafte Weiterbildungen und Verbesserungen des in den nebengeordneten Ansprüchen 1 und 7 angegebenen Verfahrens bzw. der Vorrichtung gegeben. Als besonders vorteilhaft wird angesehen, dass beim Anwählen eines mit Nutzdaten belegten Übertragungskanals der benachbarte Übertragungskanal geprüft wird, um festzustellen, ob der benachbarte Übertragungskanal bereits mit einer Kennung versehen ist oder nicht. Wird keine Kennung detektiert, dann ist der benachbarte Übertragungskanal mit einem Nutzsignal belegt, so dass er für die nächste Anwahl freigeschaltet werden kann. Wird dagegen auf dem Nachbarkanal eine Kennung festgestellt, dann ist dieser Übertragungskanal nicht nutzbar, so dass er automatisch gesperrt wird.

Ein weiterer vorteilhafter Aspekt der Erfindung wird auch darin gesehen, dass fortlaufend der jeweils nächste benachbarte Übertragungskanal automatisch mitgeprüft werden kann, wenn zuvor ein mit einer Kennung versehener Übertragungskanal festgestellt wurde. Dadurch können in vorteilhafter Weise sehr einfach alle nutzbaren beziehungsweise nicht nutzbaren Übertragungskanäle ermittelt werden. Insbesondere wird ein Weiterschalten verhindert, wenn kein weiterer nutzbarer Übertragungskanal verfügbar ist, oder es werden alle nicht benutzten Übertragungskanäle automatisch übersprungen.

Bei dem erfindungsgemäßen Verfahren ist vorgesehen, dass jeder nicht mit einem Nutzsignal belegte Übertragungskanal mit einer Kennung versehen wird. Als Kennung wird vorzugsweise eine Gleichspannung oder ein Gleichspannungssignal verwendet. Dieses Gleichspannungssignal lässt sich leicht detektieren, da es sich von den üblichen Wechselspannungsfrequenzen eines Nutzsignals eindeutig unterscheidet. Bei der Codierung ist daher lediglich zu prüfen, ob auf dem zu prüfenden Übertragungskanal ein Gleichspannungsanteil vorhanden ist oder nicht. Wird ein Gleichspannungsanteil erkannt, dann wird ein Weiterschalten auf diesen Kanal unterdrückt bzw. verhindert.

Um festzustellen, welcher Übertragungskanal momentan ausgewählt wurde und insbesondere, welche Nutzsignalquelle empfangen wird, ist vorgesehen, eine entsprechende Anzeige auf einem Display auszugeben, die am Empfangsmodul angeordnet ist. Beispielsweise kann eine Kanalnummer und/oder ein Programmname, die Signalquelle oder dergleichen optisch ausgegeben werden.

Ein Ausführungsbeispiel der Erfindung ist in der Zeichnung dargestellt und wird in der nachfolgenden Beschreibung näher erläutert.
Figur 1 zeigt in schematischer Darstellung ein Blockschaltbild einer Vorrichtung mit einem Multikanal-Übertragungssystem,
Figur 2 zeigt ein vereinfachtes Blockschaltbild einer erfindungsgemäßen Zentraleinheit und
Figur 3 zeigt ein erfindungsgemäßes Empfangsmodul beziehungsweise Sitzplatzmodul.

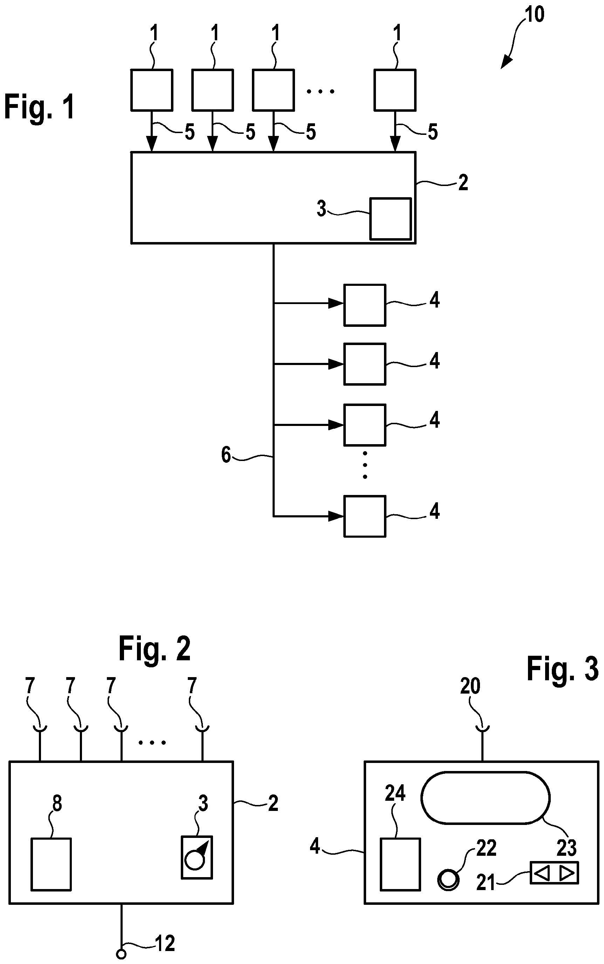

Das Blockschaltbild der Figur 1 zeigt ein Multikanal-Übertragungssystem 10 mit einer Zentraleinheit 2. An die Zentraleinheit 2 können über entsprechende Eingangsklemmen mehrere Signalquellen 1 angeschlossen werden. Als Signalquellen 1 sind zum Beispiel Rundfunkempfänger, Bandgeräte, CD-Player, MP3-Player, Video-Recorder, ein oder mehrere Mikrofone und Ähnliches anschließbar. Die Art und Anzahl der Signalquellen 1 richtet sich nach der Ausgestaltung des Multikanal-Übertragungssystems 10. In Figur 1 sind vier Signalquellen dargestellt. Die Signalquellen liefern an ihren Ausgängen ein Nutzsignal 5, das keinen Gleichspannungsanteil enthält oder wechselspannungsgekoppelt übertragen werden kann. Die Nutzsignale 5 können Ton- und/oder Bildsignale enthalten. Die Nutzsignale 5 werden auf die Zentraleinheit 2 geführt und von dieser über eine beliebige Anzahl von Übertragungskanälen mit Hilfe eines Multiplexsignals 6 an Empfangsmodule 4 weitergeleitet. Aufgabe der Zentraleinheit 2 ist es, jedem Empfangsmodul 4 (Sitzplatzmodul) die Nutzsignale auf den einzelnen Übertragungskanälen über das Multiplexsignal 6 zur Verfügung zu stellen. Beispielsweise werden die Nutzsignale nach bekannten Multiplex-Verfahren an die Empfangsmodule 4 übertragen.

Die Empfangsmodule 4 sind im Bereich eines Sitzplatzes angeordnet, so dass sie leicht zu bedienen sind. An den Empfangsmodulen 4 kann jeder nutzbare Übertragungskanal von einer beliebigen Person ausgewählt und das entsprechende Nutzsignal, beispielsweise ein Tonsignal, über einen eingebauten Lautsprecher oder über eine Kopfhörergarnitur ausgegeben werden. Dazu befindet sich am Empfangsmodul 4 ein Auswahlschalter, mit dem ein individueller Übertragungskanal ausgewählt werden kann, wie später noch näher erläutert wird.

Das Multikanal-Übertragungssystem 10 ist für die Verwendung in einem Fahrzeug, beispielsweise in einem Omnibus, in einer Bahn, in einem Flugzeug, in einem Vortragssaal/Konferenzraum oder dergleichen verwendbar. In diesen ist - räumlich gesehen - eine beliebige Anzahl von Sitzplätzen vorhanden. Erfindungsgemäß ist vorgesehen, dass bei möglichst vielen oder allen Sitzplätzen ein Empfangsmodul 4 so angeordnet ist, dass es von jedem Fahrgast oder Hörer leicht bedient werden kann.

Bei bekannten Multikanal-Übertragungssystemen besteht das Problem, dass bei Änderung der Konfiguration, insbesondere wenn mehr Übertragungskanäle notwendig oder bei einem vorhandenen Multikanal-Übertragungssystem 10 weniger Signalquellen benötigt werden, dass auf einigen der Übertragungskanäle im Multiplexsignal 6 kein Nutzsignal zur Verfügung steht. Bei der Auswahl eines Übertragungskanals kann es daher vorkommen, dass der Benutzer einen nicht belegten Übertragungskanal ansteuert. Um dieses Problem zu vermeiden, ist erfindungsgemäß vorgesehen, dass vom Empfangsmodul 4 automatisch nur die Übertragungskanäle freigegeben werden, die von einer Signalquelle 1 auch mit einem Nutzsignal belegt werden. Dadurch ergibt sich der Vorteil, dass keine Übertragungskanäle im Multiplexsignal 6 angewählt werden können, die kein Nutzsignal übertragen. Die nicht belegten Übertragungskanäle werden erfindungsgemäß übersprungen oder blockiert.

Im Folgenden wird die Wirkungsweise der erfindungsgemäßen Vorrichtung zur Erkennung eines nicht belegten Übertragungskanals näher erläutert.

Zunächst werden alle Nutzsignale 5 der einzelnen Signalquellen 1 von der Zentraleinheit 2 (Head-End) miteinander verknüpft und über das Multiplexsignal 6 an jede Empfangseinheit 4 übertragen. Die Zentraleinheit 2 verteilt nun an alle Empfangsmodule 4 (Sitzplatzmodule) die Nutzsignale 5, so dass an jedem Sitzplatzmodul ein beliebiges Nutzsignal individuell ausgewählt werden kann.

Erfindungsgemäß ist vorgesehen, dass in der Zentraleinheit 2 ein Codierer 8 angeordnet ist. Der Codierer 8 hat die Aufgabe, nicht mit einem Nutzsignal belegte Übertragungskanäle des Multiplexsignals 6 mit einer Kennung zu codieren. Eine sehr einfache Möglichkeit für eine Kennung besteht darin, die nicht genutzten Übertragungskanäle des Multiplexsignals 6 mit einer Gleichspannung oder einem Gleichspannungssignal zu codieren. Alternativ ist vorgesehen, dass beispielsweise ein bestimmter binärer Code für die Codierung verwendet wird. Die Codierungen werden von den einzelnen Empfangsmodulen 4 mit einem entsprechenden Decoder erkannt. Ein erkannter codierter Übertragungskanal des Multiplexsignals 6 wird daraufhin für die Anwahl mit dem Anwahlschalter 21 blockiert, wie später noch näher erläutert wird.

Des weiteren ist vorgesehen, dass bei der Anwahl eines Übertragungskanals n der benachbarte Kanal n+1 ebenfalls überprüft wird, ob auf diesem Übertragungskanal eine Kennung vorhanden ist. Ist das nicht der Fall, dann wird auch der übernächste Übertragungskanal n+2 überprüft, so dass gegebenenfalls alle codierten Übertragungskanäle im Multiplexsignal 6 identifiziert werden können.

Wurde kein nicht codierter Übertragungskanal im Multiplexsignal 6 mehr gefunden, dann wird die Weiterschaltung mit dem Anwahlschalter 21 unterbunden. Der Benutzer kann dann nur wieder auf den vorherigen Übertragungskanal 6 zurückschalten, bei dem keine Kennung vorhanden war.

Wie bereits dargelegt, kann für die einfachste Codierung eine Gleichspannung auf nicht benutzte Übertragungskanäle des Multiplexsignals 6 eingekoppelt werden. Da die Nutzsignale als Wechselspannungssignale auftreten, kann die als Gleichspannung ausgebildete Kennung beispielsweise mit einem entsprechend dimensionierten Tiefpass erkannt werden. Eine derartige Codierung bzw. Decodierung ist daher mit einfachen Mitteln preiswert durchführbar. Des weiteren ergibt sich der große Vorteil, dass einerseits keine weiteren Demontagearbeiten an den einzelnen Empfangsmodulen 4 erforderlich sind. Andererseits kann auf den verdeckten Schalter im Empfangsmodul 4 verzichtet werden, da die Anwahl eines Übertragungskanal von jedem Sitzplatzmodul 4 automatisch begrenzt wird.

Figur 2 zeigt in schematischer Darstellung ein Blockschaltbild einer Zentraleinheit 2. Die Zentraleinheit 2 weist beispielhaft dargestellt vier Signaleingänge 5 auf, an die entsprechende Signalquellen 1 schaltbar sind. Ein wesentlicher Aspekt der Erfindung besteht darin, dass ein Codierer 8 vorgesehen ist, mit dem nicht benutzte Übertragungskanäle mit einer Kennung versehen werden können. Wie bereits dargelegt, erfolgt die Bildung der Kennung bevorzugt mit einem Gleichspannungssignal bzw. einer Gleichspannung, die auf die nicht genutzten Übertragungskanäle gekoppelt ist. An einem Ausgang der Zentraleinheit 2 sind die zusammengefügten Nutzsignale als Multiplexsignal 6 abgreifbar.

In Figur 3 ist in schematischer Darstellung ein Empfangsmodul 4 dargestellt. Das Empfangsmodul weist eine Einrichtung auf, mit der die Nutzsignale auf den einzelnen Übertragungskanälen des Multiplexsignals 6 empfangen werden. Des weiteren ist das Empfangsmodul 4 mit einem Anwahlschalter 21 ausgebildet, mit dem die einzeln Empfangskanäle angewählt werden können. Weiterhin ist in dem Empfangsmodul 4 ein Decoder 24 angeordnet. Der Decoder 24 prüft die einzelnen Übertragungskanäle des Multiplexsignals 6, ob sie mit einer Kennung codiert sind. Zum Beispiel wird geprüft, ob ein Übertragungskanal im Multiplexsignal 6 mit einem Gleichspannungssignal codiert wurde. Wurde ein solcher Übertragungskanal erkannt, dann wird der Anwahlschalter 21 blockiert, so dass der codierte Übertragungskanal 6 nicht aufgerufen werden kann. Des weiteren ist in dem Empfangsmodul 4 ein Display 23 angeordnet, mit dem insbesondere der aktuelle Übertragungskanal angezeigt werden kann. Weitere Informationen, wie beispielsweise ein Sendername oder die Signalquelle können auf dem Display 23 dargestellt werden. Das Empfangsmodul 4 weist des weiteren einen Anschluss 22 auf, mit dem zum Beispiel ein Kopfhörer angeschlossen werden kann, um die Nutzsignale, ohne andere Fahrgäste zu stören, empfangen zu können.

In alternativer Ausgestaltung der Erfindung kann an Stelle eines Multiplexsignals 6 auch ein anderes Kanalsystem verwendet werden, um mehrere Nutzsignale mehreren Empfangsmodulen 4 anzubieten.

## Patentansprüche

1. Verfahren zur Erkennung eines nicht belegten Übertragungskanals eines mit mehreren Übertragungskanälen ausgebildeten Multikanal-Übertragungssystems (10), insbesondere für die Übertragung von Ton- und/oder Bildsignalen, wobei die von einer beliebigen Anzahl von Signalquellen (1) gesendeten Nutzsignale (5) von einer Zentraleinheit (2) empfangen und auf entsprechenden Übertragungskanälen an beliebig viele Empfangsmodule (4) verteilt werden, wobei an jedem Empfangsmodul (4) aus einer vorgegebenen Anzahl von Übertragungskanälen individuell ein Übertragungskanal ausgewählt werden kann, **dadurch gekennzeichnet,**
- **dass** die momentan nicht belegten Übertragungskanäle des Übertragungssystems (10) von der Zentraleinheit (2) mit einer Kennung versehen werden,
- **dass** bei jedem Empfangsmodul (4) geprüft wird, welche Übertragungskanäle mit einer Kennung versehen sind und
- **dass** bei Anwahl eines mit einer Kennung versehenen Übertragungskanals dieser Übertragungskanal nicht angewählt oder übersprungen wird.

2. Verfahren nach Anspruch 1, **dadurch gekennzeichnet, dass** beim Anwählen eines mit Nutzdaten belegten Übertragungskanals n beim Übertragungskanal n+1 geprüft wird, ob der Übertragungskanal n+1 mit einer Kennung versehen ist.

3. Verfahren nach Anspruch 2, **dadurch gekennzeichnet, dass** fortlaufend der jeweils nächste benachbarte Übertragungskanal n+2 usw. geprüft wird, wenn der Übertragungskanal n+1 mit einer Kennung versehen ist.

4. Verfahren nach einem der Ansprüche 2 oder 3, **dadurch gekennzeichnet, dass** ein weiteres Hochschalten der Übertragungskanäle blockiert wird, wenn kein belegter Übertragungskanal gefunden wird.

5. Verfahren nach einem der vorhergehenden Ansprüche, **dadurch gekennzeichnet, dass** für die Kennung eines nicht belegten Übertragungskanals eine Gleichspannung oder ein Gleichspannungssignal verwendet wird.

6. Verfahren nach einem der vorhergehenden Ansprüche, **dadurch gekennzeichnet, dass** bei einem angewählten und mit einem Nutzsignal belegten Übertragungskanal eine optische Kennzeichnung, beispielsweise eine fortlaufende Nummer und/oder ein Programmname ausgegeben wird.

7. Vorrichtung zur Erkennung eines nicht belegten Übertragungskanals eines mit mehreren Übertragungskanälen ausgebildeten Multikanal-Übertragungssystems (10), mit einer Zentraleinheit (2) und mit wenigstens zwei Empfangsmodulen (4) für ein Verfahren nach einem der vorhergehenden Ansprüche, **dadurch gekennzeichnet,**
- **dass** die Zentraleinheit (2) ausgebildet ist, auf einem nicht mit einem Nutzsignal belegten Übertragungskanal eine Kennung, beispielsweise ein Gleichspannungssignal an die Empfangsmodule (4) zu übertragen und
- **dass** die Empfangsmodule (4) ausgebildet sind, die mit der Kennung belegten Übertragungskanäle zu detektieren und deren Anwahl zu blockieren.

8. Vorrichtung nach Anspruch 7, **gekennzeichnet durch** die Verwendung beispielsweise in einem Omnibus, in einer Bahn, in einem Flugzeug oder in einem Hör- oder Konferenzsaal.

9. Zentraleinheit zur Erkennung eines nicht belegten Übertragungskanals (6) eines mit mehreren Übertragungskanälen ausgebildeten Multikanal-Übertragungssystems (10) für ein Verfahren nach einem der vorhergehenden Ansprüche, **dadurch gekennzeichnet, dass** die Zentraleinheit (2) eine Einrichtung aufweist, mit der ein nicht mit einem Nutzsignal belegter Übertragungskanal mit einer Kennung, vorzugsweise mit einem Gleichspannungssignal belegt wird.

10. Empfangsmodul zur Erkennung eines nicht belegten Übertragungskanals eines mit mehreren Übertragungskanälen (6) ausgebildeten Multikanal-Übertragungssystems (10) für ein Verfahren nach einem der vorhergehenden Ansprüche, **dadurch gekennzeichnet, dass** das Empfangsmodul (4) im Bereich eines Sitzplatzes für eine Person angeordnet ist und dass das Empfangsmodul (4) einen Decoder (9) aufweist, mit dem ein mit einer Kennung versehener Übertragungskanal detektierbar ist.

## Claims

1. Method for recognizing a free transmission channel of a multichannel transmission system (10) designed with multiple transmission channels, particularly for the transmission of sound and/or picture signals, wherein the useful signals (5) sent by an arbitrary number of signal sources (1) are received by a central unit (2) and distributed on applicable transmission channels to any amount of reception modules (4), wherein one transmission channel from a prescribed number of transmission channels can be selected individually on each reception module (4), **characterized**
- **in that** the currently free transmission channels of the transmission system (10) are provided with an identifier by the central unit (2),
- **in that** a check is performed for each reception module (4) to determine which transmission channels are provided with an identifier, and
- **in that** when a transmission channel provided with an identifier is called up, this transmission channel is not called up or is bypassed.

2. Method according to Claim 1, **characterized in that** when a transmission channel n assigned useful data is called up, a check is performed for the transmission channel n+1 to determine whether the transmission channel n+1 is provided with an identifier.

3. Method according to Claim 2, **characterized in that** the respective next adjacent transmission channel n+2 etc. is progressively checked if the transmission channel n+1 is provided with an identifier.

4. Method according to either of Claims 2 and 3, **characterized in that** further fall forward for the transmission channels is blocked if a busy transmission channel is not found.

5. Method according to one of the preceding claims, **characterized in that** a DC voltage or a DC voltage signal is used for the identifier of a free transmission channel.

6. Method according to one of the preceding claims, **characterized in that** a visual flag, for example a consecutive number and/or a program name, is output for a called-up transmission channel assigned a useful signal.

7. Apparatus for recognizing a free transmission channel of a multichannel transmission system (10) designed with multiple transmission channels, having a central unit (2) and having at least two reception modules (4) for a method according to one of the preceding claims, **characterized**
- **in that** the central unit (2) is designed to use a transmission channel not assigned a useful signal to transmit an identifier, for example a DC voltage signal, to the reception modules (4), and
- **in that** the reception modules (4) are designed to detect the transmission channels assigned the identifier and to block call-up of said transmission channels.

8. Apparatus according to Claim 7, **characterized by** use in an omnibus, in a train, in an aeroplane or in a lecture or conference hall, for example.

9. Central unit for recognizing a free transmission channel (6) of a multichannel transmission system (10) designed with multiple transmission channels for a method according to one of the preceding claims, **characterized in that** the central unit (2) has a device that is used to assign an identifier, preferably with a DC voltage signal, to a transmission channel not assigned a useful signal with.

10. Reception module for recognizing a free transmission channel of a multichannel transmission system (10) designed with multiple transmission channels (6) for a method according to one of the preceding claims, **characterized in that** the reception module (4) is arranged in the region of a seat for a person and **in that** the reception module (4) has a decoder (9) that can be used to detect a transmission channel provided with an identifier.

## Revendications

1. Procédé destiné à la reconnaissance d'un canal de transmission non occupé d'un système de transmission à canaux multiples (10), lequel est formé de plusieurs canaux de transmission, en particulier pour la transmission de signaux de son et/ou de signaux d'image ;
dans lequel les signaux utiles (5) qui sont émis par un nombre quelconque de sources de signaux (1) sont reçus par une unité centrale (2) et répartis sur des canaux de transmission correspondants vers un nombre de modules de réception (4) quasiment illimité ; dans lequel un canal de transmission peut être sélectionné individuellement au niveau de chaque module de réception (4), à partir d'un nombre prédéterminé de canaux de transmission ; **caractérisé en ce que** :
- les canaux de transmission du système de transmission (10) qui ne sont actuellement pas occupés sont dotés d'un identifiant par l'unité centrale (2) ;
- une vérification a lieu pour chaque module de réception (4) pour savoir quels sont les canaux de transmission dotés d'un identifiant ; et
- quand un canal de transmission doté d'un identifiant est sélectionné, ledit canal de transmission n'est pas sélectionné ou est ignoré.

2. Procédé selon la revendication 1, **caractérisé en ce que**, quand un canal de transmission « n » qui est occupé par des données utiles est sélectionné, une vérification a lieu pour le canal de transmission « n+1 » pour savoir si ledit canal de transmission « n+1 » est doté d'un identifiant.

3. Procédé selon la revendication 2, **caractérisé en ce que** le canal de transmission « n+2 » etc. qui suit respectivement immédiatement est vérifié en permanence quand le canal de transmission « n+1 » est doté d'un identifiant.

4. Procédé selon l'une des revendications 2 ou 3, **caractérisé en ce que** tout passage à un autre numéro consécutif supérieur des canaux de transmission est bloqué, quand aucun canal de transmission occupé n'est trouvé.

5. Procédé selon l'une des revendications précédentes, **caractérisé en ce qu'**une tension continue ou un signal de tension continue est employé(e) pour l'identifiant d'un canal de transmission non occupé.

6. Procédé selon l'une des revendications précédentes, **caractérisé en ce qu'**une identification optique, par exemple un numéro consécutif et/ou un nom de programme, est émis quand un canal de transmission qui est occupé par un signal utile est sélectionné.

7. Dispositif destiné à la reconnaissance d'un canal de transmission non occupé d'un système de transmission à canaux multiples (10), lequel est formé de plusieurs canaux de transmission, lequel dispositif comprend une unité centrale (2) et au moins deux modules de réception (4) pour un procédé selon l'une des revendications précédentes, **caractérisé en ce que** :
- l'unité centrale (2) est conçue en vue de transmettre aux modules de réception (4) un identifiant sur un canal de transmission qui n'est pas occupé par un signal utile, par exemple un signal de tension continue ; et
- les modules de réception (4) sont conçus en vue de détecter les canaux de transmission qui sont occupés par l'identifiant et de bloquer leur sélection.

8. Dispositif selon la revendication 7, **caractérisé par** l'utilisation, par exemple, dans un omnibus, dans un train, dans un avion, dans une salle de conférence ou dans un auditoire.

9. Unité centrale destinée à la reconnaissance d'un canal de transmission (6) non occupé d'un système de transmission à canaux multiples (10), lequel est formé de plusieurs canaux de transmission, pour un procédé selon l'une des revendications précédentes, **caractérisé en ce que** l'unité centrale (2) présente un mécanisme, au moyen duquel un canal de transmission, qui n'est pas occupé par un signal utile, est occupé par un identifiant, de préférence par un signal de tension continue.

10. Module de réception destinée à la reconnaissance d'un canal de transmission non occupé d'un système de transmission à canaux multiples (10), lequel est formé de plusieurs canaux de transmission (6), pour un procédé selon l'une des revendications précédentes, **caractérisé en ce que** le module de réception (4) est disposé dans la zone d'une place assise destinée à une personne et **caractérisé en ce que** le module de réception (4) présente un décodeur (9), au moyen duquel un canal de transmission doté d'un identifiant peut être détecté.
